# DEMANDE DE BREVET EUROPEEN

(11) **EP 2 737 964 A1**
(43) Date de publication de la demande: **04.06.2014**
(21) Numéro de dépôt: 13195166.7
(22) Date de dépôt: 29.11.2013
(51) Int. Cl.: B22F 3/10, B22F 3/105, B29C 67/00

(54) **Procédé de fusion de poudre avec chauffage de la zone adjacente au bain**

(30) Priorité: 30.11.2012 FR 1203258
(71) Demandeur: MBDA France, 75016 Paris (FR)
(72) Inventeur: Colin, Christophe, 91000 Evry (FR); Fromentin, Jean-François, 77240 Cesson (FR); Saussereau, Gérard, 78320 Le Mesnil Saint Denis (FR)
(74) Mandataire: Intès, Didier Gérard André

(57) **Abrégé**

L'invention concerne un procédé de fabrication d'une pièce comprenant les étapes suivantes :
(a) On fournit un matériau sous forme de particules de poudre (60),
(b) On chauffe une première quantité de cette poudre à une température supérieure à sa température de fusion T_{F} à l'aide d'un faisceau de haute énergie (95), et on forme à la surface d'un support (80) un premier bain comprenant cette poudre fondue et une portion de ce support (80),
(c) On chauffe de même une deuxième quantité de la poudre, et on forme à la surface du support (80) un deuxième bain comprenant cette poudre fondue en aval de ce premier bain,
(d) On répète l'étape (c) jusqu'à former une première couche (10) de la pièce sur le support (80),
(e) On chauffe de même une [n]^{ième} quantité de la poudre, et on forme un [n]^{ième} bain comprenant cette poudre fondue au-dessus d'une portion de la première couche (10),
(f) On chauffe de même une [n+1]^{ième} quantité de la poudre, et on forme un [n+1]^{ième} bain comprenant cette poudre fondue en aval du [n]^{ième} bain,
(g) On répète l'étape (f) de façon à former une deuxième couche (20) de la pièce au-dessus de la première couche (10),
(h) On répète les étapes (e) à (g) pour chaque couche de poudre située au dessus d'une couche de poudre qui a déjà été formée jusqu'à ce que ladite pièce soit sensiblement sous sa forme finale.

Au moins pendant la formation de chacun des bains (102), on utilise un chauffage d'appoint pour chauffer la matière située dans une zone adjacente au bain (102), cette zone comprenant au moins une région choisie parmi la région amont (101) située en amont du bain (102) et la région aval (103) située en aval du bain (102), à une température inférieure à la température de fusion T_{F}.

## Description

La présente invention concerne le domaine de la fabrication de pièces par fusion de poudre au moyen d'un faisceau de haute énergie (faisceau laser, faisceau d'électrons,...).

L'invention concerne plus particulièrement un procédé comprenant les étapes suivantes :
(a) On fournit un matériau sous forme de particules de poudre,
(b) On chauffe une première quantité de cette poudre à une température supérieure à la température de fusion T_{F} de cette poudre à l'aide d'un faisceau de haute énergie, et on forme à la surface d'un support un premier bain comprenant cette poudre fondue et une portion de ce support,
(c) On chauffe une deuxième quantité de cette poudre à une température supérieure à sa température de fusion T_{F} à l'aide de ce faisceau de haute énergie, et on forme à la surface du support un deuxième bain comprenant cette poudre fondue et une portion de ce support en aval de ce premier bain,
(d) On répète l'étape (c) jusqu'à former une première couche de cette pièce sur ce support,
(e) On chauffe une [n]-ième quantité de cette poudre à une température supérieure à sa température de fusion T_{F} à l'aide d'un faisceau de haute énergie, et on forme un [n]-ième bain comprenant en partie cette poudre fondue au dessus d'une portion de cette première couche,
(f) On chauffe une [n+1]-ième quantité de cette poudre à une température supérieure à sa température de fusion T_{F} à l'aide de ce faisceau de haute énergie, et on forme un [n+1]-ième bain comprenant en partie cette poudre fondue en aval dudit [n]-ième bain au dessus d'une portion de cette première couche,
(g) On répète l'étape (f) de façon à former une deuxième couche de la pièce au-dessus de ladite première couche,
(h) On répète les étapes (e) à (g) pour chaque couche située au dessus d'une couche déjà formée jusqu'à ce que la pièce soit sensiblement sous sa forme finale.

Dans le procédé ci-dessus, il faut [n-1] quantités de poudre pour former la première couche.

On connaît des procédés qui permettent d'obtenir des pièces mécaniques de forme complexe en trois dimensions (3D). Ces procédés construisent une pièce couche par couche jusqu'à reconstituer la forme désirée de cette pièce. Avantageusement, la pièce peut être reconstituée directement à partir du fichier CFAO déduit du traitement des données de son fichier graphique CAO en 3D au moyen d'un pilotage par ordinateur de la machine qui forme ainsi l'une sur l'autre des couches successives de matière fondue puis solidifiée, chaque couche étant constituée de cordons juxtaposés ayant une taille et une géométrie définie à partir du fichier CFAO.

Les particules constituant la poudre sont par exemple métalliques, intermétalliques, céramiques, ou polymères.

Dans la présente demande, dans le cas où la poudre est un alliage métallique, la température de fusion T_{F} est une température comprise entre la température de liquidus et la température de solidus pour la composition donnée de cet alliage.

Le support de construction peut être une partie d'une autre pièce sur laquelle on désire rajouter une fonction supplémentaire. Sa composition peut être différente de celle des particules de poudre projetée et ainsi posséder une température de fusion différente.

Ces procédés sont notamment la projection laser (en anglais "Direct Metal Deposition" ou DMD), la "fusion sélective par laser" (en anglais "Selective Laser Melting" ou SLM), et la "fusion par faisceau d'électrons" (en anglais "Electron Beam Melting" ou EBM). Les caractéristiques et le fonctionnement des procédés DMD et SLM sont rappelés brièvement ci-après.

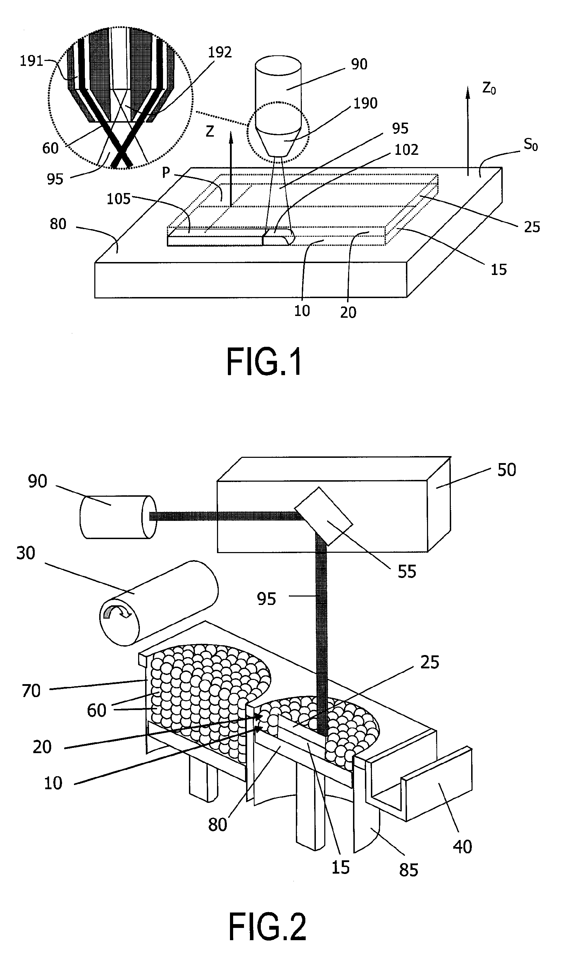

Le fonctionnement du procédé DMD est expliqué ci-dessous en référence à la figure 1.

On forme, sous protection locale ou dans une enceinte en surpression ou en dépression régulée de gaz inerte, une première couche 10 de matériau par projection de particules de poudre de ce matériau sur un support 80, au travers d'une buse 190. Cette buse 190 émet, simultanément à la projection de particules 60 de poudre, un faisceau laser 95 qui provient d'un générateur 90. Le premier orifice 191 de la buse 190 par lequel la poudre est projetée sur le support 80 est coaxial au second orifice 192 par lequel le faisceau laser 95 est émis, de telle sorte que la poudre est projetée dans le faisceau laser 95. La poudre forme un cône de particules, ce cône étant creux et présentant une certaine épaisseur, et le faisceau laser est conique.

Le faisceau laser 95 forme un bain 102 sur le support 80 par fusion de la région du support 80 exposée au faisceau laser. La poudre alimente le bain 102 dans lequel elle parvient à l'état fondu, la poudre ayant été fondue durant son trajet dans le faisceau laser avant d'arriver dans le bain.

Alternativement, la buse 190 peut être réglée et/ou positionnée de telle sorte que la poudre ne passe pas par exemple suffisamment de temps dans le faisceau laser 95 pour que l'ensemble de la poudre soit complètement fondue, et fonde en arrivant dans le bain 102 préalablement formé sur la surface du support 80 par fusion de la région du support 80 exposée au faisceau laser 95.

La poudre peut également ne pas être fondue par le faisceau laser 95 ou ne l'être que partiellement parce que la taille de toutes ou certaines des particules constituant la poudre est trop importante pour qu'elles soient fondues.

Tandis que le faisceau laser 95 (ou le support 80) se déplace vers l'aval, le bain 102 est entretenu et se solidifie de proche en proche pour former un cordon de matière solidifiée 105 sur le support 80. On poursuit le processus pour former un autre cordon solidifié sur le support 80, cet autre cordon étant par exemple juxtaposé au premier cordon. Ainsi, par déplacement de la buse 190 ou du support 80 dans un plan parallèle au plan de travail, on dépose sur le support 80 une première couche 10 de matière qui forme en se solidifiant un premier élément 15 d'un seul tenant dont la géométrie est conforme à celle définie par le fichier CFAO. On définit le plan de travail P comme étant le plan contenant la surface sur laquelle la couche est en construction/en formation.

On effectue ensuite un second balayage de l'ensemble buse 190/ faisceau laser 95, afin de former de façon similaire une deuxième couche 20 de matière au dessus du premier élément 15. Cette deuxième couche 20 forme un deuxième élément consolidé 25, l'ensemble de ces deux éléments 15 et 25 formant un bloc d'un seul tenant. Les bains 102 formés sur le premier élément 15 lors de la construction de cette deuxième couche 20 comprennent en général au moins une partie du premier élément 15 qui a été fondue par exposition au faisceau laser 95, et les particules de la poudre alimentent les bains 102.

On considère le repère constitué par l'axe vertical Z₀ perpendiculaire à la surface S₀ du support, et par la surface du support. Cette surface S₀ du support est le plan de hauteur nulle. Un plan contenu dans le support ou en dessous de la surface S₀ (et perpendiculaire à cet axe vertical Z₀) est de hauteur négative, et un plan au-dessus de la surface S₀ du support (et perpendiculaire à cet axe vertical Z₀) est de hauteur positive. Un plan donné sera au-dessus d'un autre plan s'il a une hauteur positive supérieure à la hauteur de cet autre plan.

Dans ce repère, la deuxième couche 20 se situe dans un plan qui est situé au-dessus du plan de la première couche 10.

Pour une couche en général, le plan de travail P n'est pas nécessairement parallèle à la surface S₀. L'axe Z défini comme étant perpendiculaire au plan de travail P, n'est donc pas nécessairement parallèle à l'axe Z₀.Dans le cas général, le plan de travail d'une couche supérieure peut ne pas être parallèle au plan de travail de la couche inférieure précédente, dans ce cas l'axe Z de la couche supérieure fait un angle non-nul avec l'axe Z du plan de travail de la couche inférieure, et la distance ΔZ, mesurée selon ce dernier axe Z au-dessus de chaque point de la couche inférieure, est une valeur moyenne.

On poursuit ensuite ce processus d'élaboration de la pièce couche par couche en ajoutant des couches supplémentaires au-dessus de l'ensemble déjà formé.

Le déplacement du support 80 ou le balayage de l'ensemble buse 190/faisceau laser 95 permet de donner à chaque couche une forme indépendante des couches adjacentes. Les couches inférieures de la pièce sont recuites et se refroidissent au fur et à mesure que l'on forme les couches supérieures de la pièce.

Le fonctionnement du procédé SLM est expliqué ci-dessous en référence à la figure 2.

La poudre est composée de particules 60 disposées dans un bac d'alimentation 70 dont le fond est réglable en hauteur. On dépose, par exemple à l'aide d'un rouleau 30 (ou tout autre moyen de dépose), une première couche 10 de poudre d'un matériau sur un support de construction 80, cette poudre étant transvasée depuis le bac d'alimentation 70.

Le support de construction 80 coulisse dans un bac de construction 85, les parois latérales de ce bac de construction 85 permettant de confiner latéralement la poudre. Le rouleau 30 sert également à étaler, et éventuellement compacter la poudre sur le support de construction 80, par passages successifs. L'excédent de poudre est récupéré dans un bac de recyclage 40 situé de façon adjacente au bac de construction 85.

Puis on porte une région de cette première couche 10 de poudre, par balayage avec un faisceau laser 95 émis par un générateur 90, à une température supérieure à la température de fusion T_{F} de cette poudre.

Ainsi, les particules de poudre 60 de cette région de la première couche 10 sont fondues et forment un premier élément 15 d'un seul tenant. Lors de cette phase, il peut se produire également une fusion partielle du support 80, le rendant solidaire avec le premier élément 15.

On abaisse le support 80 d'une hauteur correspondant à celle déjà définie à la première couche (20 à 100 µm et en général de 30 à 50 µm). L'épaisseur de la couche de poudre à fusionner reste une valeur variable d'une couche à l'autre car elle est fort dépendante de la porosité du lit de poudre et de sa planéité.

On dépose une deuxième couche 20 de poudre au dessus de la première couche 10 (en référence au repère défini ci-dessus).

On chauffe ensuite par exposition au faisceau laser 95 une région de la deuxième couche 20 qui est située au moins partiellement au dessus de ce premier élément consolidé 15, de telle sorte que les particules de poudre de cette région de la deuxième couche 20 sont fondues et forment un deuxième élément consolidé 25, l'ensemble de ces deux éléments 15 et 25 formant, dans le cas illustré à la figure 2, un bloc d'un seul tenant en se solidifiant, grâce à une fusion au moins partielle du premier élément 15 sous l'effet du faisceau laser 95.

Selon le profil de la pièce à construire, et notamment dans le cas d'une surface en contre-dépouille, il se peut que la région précitée et fondue puis solidifiée de la deuxième couche 20 ne soit pas jointive avec la région fondue et solidifiée de la première couche 10, de sorte que dans ce cas le premier élément consolidé 15 et le deuxième élément consolidé 25 ne forment pas un bloc d'un seul tenant.

On poursuit ensuite ce processus de construction de la pièce couche par couche en ajoutant des couches supplémentaires de poudre au-dessus de l'ensemble déjà formé.

Pour certaines géométries de pièce, la région d'une (ou de plusieurs) couche donnée balayée par le faisceau laser 95 peut former plusieurs éléments indépendants au sein de cette couche, ces éléments étant alors disjoints.

La région d'une couche donnée peut être la totalité de cette couche.

Le balayage du faisceau laser 95 permet de consolider chaque couche en lui donnant une forme en accord avec la géométrie de la pièce à réaliser. Les couches inférieures de la pièce se refroidissent au fur et à mesure que les couches supérieures de la pièce sont construites.

Ce balayage du faisceau laser 95 est effectué par un système de pilotage. Par exemple, dans le cas du procédé SLM, le système de pilotage 50 comprend un (ou plusieurs) miroir 55 orientable sur lequel le faisceau laser 95 se réfléchit avant d'atteindre une couche de poudre, la position angulaire de ce (ou de ces) miroir 55 étant pilotée par une tête galvanométrique pour que le faisceau laser balaye une région de la couche de poudre, et suive ainsi un profil de pièce préétabli. Cette tête galvanométrique est commandée par le fichier CFAO (Conception et Fabrication Assistées par Ordinateur) déduit du traitement des données CAO (Conception Assistée par Ordinateur) de la pièce à fabriquer.

Dans le cas du procédé DMD, le système de pilotage 50 (non représenté sur la figure 1) déplace l'ensemble buse 190/faisceau laser 95 ou le support 80.

Le procédé DMD ou le procédé SLM peut utiliser n'importe quel faisceau de haute énergie à la place du faisceau laser 95, tant que ce faisceau est suffisamment énergétique pour fondre les particules de poudre et une partie du matériau sous lequel le cordon de matière solidifiée se forme.

Les procédés SLM et DMD présentent cependant des inconvénients.

En effet, la poudre est portée complètement au dessus de sa température de fusion T_{F} par exposition directe au faisceau laser 95 ou en arrivant dans le bain liquide chauffé ou entretenu par le faisceau laser 95 (fusion indirecte de la poudre). La matière de la poudre fondue subit alors un cycle de montée en température et de refroidissement lorsque le bain se solidifie jusqu'à une température dite de recuit entre sa température de fusion T_{F} et la température ambiante (l'ambiante).

Le chauffage du bain est très rapide, car le faisceau laser 95 apporte en un temps très bref une énergie importante à la matière.

Le refroidissement du bain est également très rapide, car il y a un pompage thermique de la chaleur du bain par les couches précédemment formées sous le bain et déjà solidifiées, ces couches déjà solidifiées formant un bloc massif. De plus, le bain passe dans un temps très bref (inversement proportionnel à la vitesse de balayage du faisceau laser 95) d'un environnement très chaud du fait de l'exposition au faisceau laser à un environnement soumis à une température plus proche de l'ambiante que de sa température de fusion T_{F}, ce qui équivaut à une trempe à l'air.

Ces chauffages et refroidissements rapides successifs de portions de la pièce génèrent durant la construction des contraintes ou des déformations selon la géométrie, dimension et bridage de la pièce. Le bridage désigne l'action d'utiliser un raidisseur qui va rigidifier une partie mince d'une pièce pour éviter la déformation de cette partie mince.

Si la pièce construite est massive et donc peu déformable, des contraintes vont s'accumuler dans la pièce lors de sa fabrication sous forme de contraintes résiduelles voire de fissures lorsque ces contraintes dépassent la contrainte à la rupture du matériau. Plus tard, en service, si la température de fonctionnement de la pièce est trop élevée, il va alors se produire une déformation de la pièce par relaxation de ces contraintes résiduelles.

Si la pièce construite présente des parois minces et peu bridées (c'est-à-dire qu'une de leurs dimensions est faible devant les deux autres et libres de se déplacer), les contraintes générées lors du refroidissement de chaque bain vont déformer la pièce au cours de sa construction. Ces déformations conduisent donc à fabriquer une pièce dont la forme et précision dimensionnelle ne sont pas celles souhaitées.

De plus, ces déformations de la pièce vont perturber son procédé de fabrication. En effet, étant donné que la position des cordons d'une couche dépend du fichier CFAO déduit du traitement des données CAO de la pièce à fabriquer qui reproduit le volume de la pièce, une couche supérieure risque par exemple de ne pas se former entièrement au dessus d'une couche inférieure, puisque cette dernière aura été déformée et déplacée par rapport à sa position initialement prévue par le fichier CFAO.

La présente invention vise à remédier à ces inconvénients.

L'invention vise à proposer un procédé qui permette de diminuer voire supprimer les contraintes générées lors de la formation des bains induite par un chauffage rapide, puis lors du refroidissement brutal de ces bains.

Ce but est atteint grâce au fait que, au moins pendant la formation de chacun des bains 102, on utilise un chauffage d'appoint pour chauffer la matière située dans une zone adjacente à ce bain, cette zone comprenant au moins une région choisie parmi la région amont située en amont (i.e. en arrière) de ce bain et la région aval située en aval (i.e. en avant) de ce bain, à une température inférieure à la température de fusion T_{F}.

Grâce à ces dispositions, on génère des contraintes internes moins élevées dans la pièce par le chauffage et le refroidissement moins brutal de la matière qui forme les bains liquides de poudre successifs. On évite donc la formation de contraintes résiduelles trop élevées et de fissures dans la pièce.

Avantageusement, on chauffe la matière dans la région amont en amont du bain de façon à diminuer la vitesse de refroidissement de cette matière en dessous de sa vitesse de refroidissement naturelle.

Ainsi, on évite un refroidissement trop rapide de cette matière qui y génère des contraintes résiduelles.

L'invention concerne également un dispositif destiné à fabriquer une pièce par fusion de poudre à l'aide d'un faisceau de haute énergie, ce dispositif comprenant
- Un support de construction destiné à recevoir au moins une couche de poudre,
- Un générateur de faisceau de haute énergie apte à porter les particules de cette poudre à une température supérieure à leur température de fusion T_{F}, et à former un bain liquide comprenant les particules de cette poudre fondue.

Selon l'invention, ce dispositif comprend en outre un dispositif de chauffage d'appoint qui est apte à chauffer, à une température inférieure à la température de fusion T_{F}, la matière située dans une zone connexe (adjacente) à ce bain, cette zone comprenant au moins une région choisie parmi la région amont située en amont de ce bain et la région aval située en aval de ce bain.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1, déjà décrite, est un schéma explicatif du procédé selon l'art antérieur illustrant le dispositif utilisé dans le cas du procédé DMD,
- la figure 2, déjà décrite, est un schéma explicatif du procédé selon l'art antérieur illustrant le dispositif utilisé dans le cas du procédé SLM,
- la figure 3 est un schéma illustrant le positionnement des régions amont et aval par rapport au bain,
- la figure 4 est un schéma illustrant le procédé selon l'invention dans le cas où le procédé DMD est utilisé.

Dans la description qui suit, le faisceau utilisé pour faire fondre les particules de poudre 60 est un faisceau laser 95. Cependant, dans le procédé DMD ou le procédé SLM n'importe quel faisceau de haute énergie 95 peut être utilisé en place du faisceau laser 95, tant que ce faisceau de haute énergie est suffisamment énergétique pour fondre les particules de poudre, et une partie du support ou des couches inférieures.

Dans la description qui suit, les termes "amont" et "aval" sont définis par rapport à la direction d'avancement du bain liquide. Ce bain est alimenté en particules de poudre.

Ainsi, le faisceau laser 95 est positionné au-dessus du bain 102 qu'il vient de former à la surface de la pièce soit en chauffant la poudre à une température supérieure à la température de fusion T_{F} de cette poudre, soit en chauffant la surface de la pièce (les particules de poudre fondant alors au contact de ce bain 102). La région 103 de la pièce qui est adjacente au bain 102 et qui va être exposée ensuite au faisceau laser 95 et être ainsi chauffée constitue la région aval par rapport au bain 102, et la région 101 de la pièce qui est connexe au bain 102 et qui vient d'être exposée au faisceau laser 95 et qui est en train de refroidir constitue la région amont par rapport au bain 102.

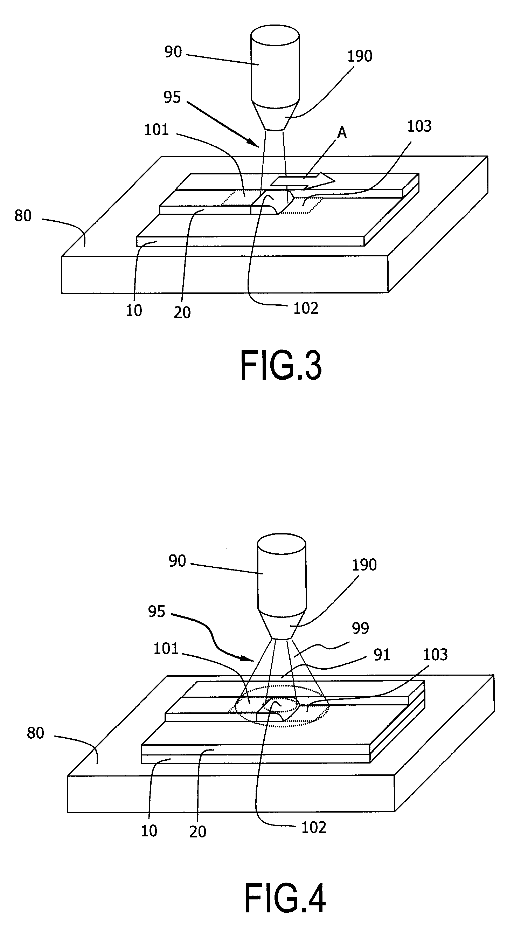

La direction d'avancement du bain liquide 102 est donc de la région 101 (amont) vers la région 103 (aval), la direction d'avancement du bain étant indiqué par la flèche A, de la gauche vers la droite sur la figure 3.

La figure 3 montre le positionnement de ces différentes régions dans le cas du procédé DMD, au stade où une deuxième couche 20 est en train d'être déposée au-dessus d'une première couche 10 qui a déjà été déposée sur le support 80. Le positionnement de ces différentes régions est identique dans le cas du procédé SLM, et quelle que soit la couche en train d'être déposée.

Dans le cas du procédé DMD, c'est soit l'ensemble buse 190/ faisceau laser 95, soit le support 80 qui se déplace. Dans le cas du procédé SLM, c'est le faisceau laser 95 qui se déplace.

Selon une première possibilité de l'invention, on chauffe la matière située en amont du bain 102 à l'aide d'un chauffage d'appoint, c'est-à-dire la matière de la région amont 101, en dessous de la température de fusion T_{F} des particules de poudre 60.

Ce chauffage est effectué au moins pendant la formation du bain 102, c'est-à-dire pendant le chauffage de ce bain. Ce chauffage peut également se poursuivre après la formation de ce bain 102.

Ainsi, on empêche la matière de la région amont 101 de se refroidir trop vite. En d'autres termes, on diminue la vitesse de refroidissement de cette région en dessous de sa vitesse de refroidissement naturelle (trempe à l'air ou à un autre gaz de préférence inerte aux températures rencontrées par le bain). Par conséquent, on diminue, voire on supprime, les contraintes qui étaient générées par un refroidissement trop rapide de la matière de cette région amont 101.

Selon une deuxième possibilité de l'invention, on chauffe la matière située en aval du bain 102 à l'aide d'un chauffage d'appoint, c'est-à-dire la matière de la région aval 103, en dessous de la température de fusion T_{F} des particules de poudre 60.

Ce chauffage est effectué au moins pendant la formation du bain 102, c'est-à-dire pendant le chauffage de ce bain. Ce chauffage peut également débuter plus tôt, c'est-à-dire avant la formation du bain 102.

Dans le cas du procédé DMD, on préchauffe donc la surface sur laquelle les particules de poudre 60 vont être déposées plus tard par la buse 190 (période de formation du bain suivant).

Dans le cas du procédé SLM, on préchauffe les particules de poudre 60 de la région aval 103.

Dans les deux procédés, la région aval 103 étant déjà préchauffée au moment où un nouveau bain commence à se former sur cette région aval (qui devient alors la nouvelle région de bain 102), la vitesse de chauffage de cette région jusqu'à la température de fusion T_{F} sera alors plus faible que sa vitesse de chauffage naturelle (passage direct de la température ambiante à la température induite par le faisceau laser 95 en l'absence de chauffage d'appoint), car la température de la matière de cette région sera plus proche de la température de fusion T_{F} au moment de l'arrivée du faisceau laser 95 et donc subira un chauffage moins rapide par ce dernier pour atteindre une température supérieure à la température T_{F}. Par conséquent, on diminue voire on supprime les contraintes ou les fissures qui étaient générées dans la matière de cette région aval 103 par un chauffage trop rapide de cette matière. Ceci est particulièrement intéressant dans le cas de matériaux sensibles aux chocs thermiques à la chauffe ou dans le cas de matériaux dont la ténacité, la résilience ou la ductilité est faible à des températures plus proches de l'ambiante que de la température de fusion T_{F}, ou dont la transition ductile-fragile se situe à une température relativement élevée (de l'ordre de T_{F}/2). La transition ductile-fragile se définit comme la température en dessous laquelle le matériau n'accepte plus de déformation plastique et passe directement de l'état élastique à la rupture.

On note que selon l'invention, le chauffage de la zone adjacente au bain 102 à l'aide d'un chauffage d'appoint est effectué en supplément du chauffage naturel par conduction de la chaleur provenant du bain 102. De plus, ce chauffage naturel n'affecte que la périphérie immédiate du bain 102 ("Zone Affectée Thermiquement" ou ZAT) et est d'une étendue insuffisante pour avoir une influence marquée sur les contraintes générées dans la pièce lors de la formation des bains 102 (voir ci-dessus).

En conséquence, grâce au procédé selon l'invention, on diminue voire on supprime les contraintes générées dans la pièce lors de la formation successive des bains liquides 102.

De plus, lorsque le chauffage de la région amont 101 par le chauffage d'appoint porte cette région amont 101 à une température proche de la température T_{F}, on diminue la rugosité (état de surface) de la pièce. Par "température proche de la température T_{F} ", on entend une température comprise entre 0,9·T_{F} et T_{F}.

Dans le procédé selon l'invention, on chauffe, par un dispositif de chauffage d'appoint, une zone adjacente ou connexe au bain 102 (c'est-à-dire touchant le bain 102) comprenant une région choisie parmi la région amont 101 et la région aval 103 par rapport au bain 102. Cette zone peut ainsi comporter uniquement la région amont 101, ou uniquement la région aval 103, ou ces deux régions.

Cette zone peut également comporter, outre l'une de ces régions ou ces deux régions, les régions latérales par rapport au bain 102 et notamment dans la même couche en cours de construction. Les inventeurs ont constaté que dans ce cas le chauffage d'appoint selon l'invention est plus efficace pour diminuer les contraintes au sein de la pièce.

Avantageusement, la zone adjacente chauffée par le chauffage d'appoint s'étend suffisamment loin du bain 102 pour couvrir au moins la région où se situait le bain précédant le bain 102 et/ou au moins la région où se situera le bain suivant le bain 102.

Etant donné que le chauffage d'au moins une partie de cette zone adjacente au bain est effectué quelle que soit la position du bain 102, le moyen de chauffage de cette zone se déplace en synchronisation avec le générateur 90 du faisceau laser 95.

Les inventeurs ont constaté que si la température de chauffage de la zone par le chauffage d'appoint se situe entre un quart et quatre-cinquièmes de la température de fusion de la poudre T_{F}, c'est-à-dire de l'ordre de T_{F}/4 à 4/5 T_{F}, alors les contraintes générées dans la pièce lors de la formation des bains liquides 102 sont minimisées.

Avantageusement, les inventeurs ont constaté que cette température de chauffage peut être comprise entre T_{F}/3 et T_{F}/2, et dépend entre autre de la vitesse d'avancement du bain, de la puissance apportée par le faisceau laser, de la quantité de poudre fondue (donc de l'étendue du bain) et de la surface sur laquelle la zone adjacente au bain doit être chauffée.

Dans le cas où cette zone adjacente comprend la région aval 103, il est préférable que cette température de chauffage se situe au dessus de la température de transition ductile-fragile du matériau de la poudre de façon à réduire le risque de sa fissuration par choc thermique (i.e. par la forte vitesse de montée en température).

Le chauffage de la zone adjacente au bain 102 peut être accompli par divers dispositifs de chauffage.

Par exemple, on peut chauffer l'ensemble de la pièce au moyen d'un four dans lequel la pièce et le support 80 sont placés.

On peut également utiliser une plaque chauffante située sur la face inférieure du support 80 sur lequel est construite la pièce.

Avantageusement, on peut effectuer un chauffage local autour du bain liquide 102, c'est-à-dire que seule la zone adjacente au bain liquide 102, y compris la région amont 101 et/ou la région aval 103 est chauffée.

Ce chauffage local est effectué par exemple par induction, au moyen d'un inducteur qui recouvre au moins la région amont 101 et/ou la région aval 103 et qui se déplace en synchronisation avec le générateur 90 du faisceau laser 95.

Ce chauffage local peut également être effectué par un faisceau de haute énergie qui chauffe la zone adjacente du bain liquide 102 à une température inférieure à la température de fusion T_{F}. Dans ce cas, cette zone entoure complètement le bain 102.

Ce faisceau de haute énergie est par exemple un second faisceau laser qui est émis par un second générateur de telle sorte que ce second faisceau est de préférence coaxial au faisceau laser 95 qui chauffe le bain liquide 102. Ce second faisceau laser peut également être disposé latéralement (c'est à dire non coaxial) par rapport au premier faisceau laser 95.

Ce second faisceau laser est soit de puissance moindre que le faisceau laser 95 qui forme le bain liquide 102, soit d'une longueur d'onde différente, soit défocalisé, de manière à chauffer une surface suffisamment étendue de la zone adjacente au bain liquide 102 à une température inférieure à la température de fusion T_{F}.

Alternativement, ce faisceau de haute énergie est constitué d'une partie périphérique 99 du faisceau laser 95 qui est défocalisée. Ainsi, la partie centrale 91 du faisceau laser 95 forme le bain liquide 102 avec chauffage éventuel des particules de poudre, tandis que la partie périphérique 99 du faisceau laser 95 chauffe la zone autour du bain liquide 102, y compris la région amont 101 et la région aval 103, à une température inférieure à la température de fusion T_{F}. Ce mode de réalisation est illustré sur la figure 4 dans le cas du procédé DMD.

Cet effet peut également être obtenu par un faisceau laser 95 dont la distribution d'énergie (ou la répartition de la densité de puissance) diminue avec la distance par rapport au centre du faisceau de telle sorte que la partie périphérique du faisceau chauffe moins que la partie centrale.

Cette solution présente l'avantage de ne nécessiter qu'un seul faisceau laser 95 et donc un seul générateur de faisceau laser 90.

Dans certains cas, il est nécessaire d'obtenir une pièce sans porosité.

Dans les procédés DMD et SLM, des porosités se forment souvent à l'intérieur de la pièce et à la surface de la pièce. On distingue les porosités ouvertes, qui sont débouchantes, et les porosités fermées non débouchantes. Les porosités ouvertes se forment en général en conséquence d'un choix inapproprié de paramètres procédé et/ou d'une stratégie de construction inadaptée des cordons et/ou des couches. Les porosités fermées se forment de préférence suite au gaz occlus dans les particules de poudre issu de l'atomisation et/ou au gaz (par exemple de l'argon Ar) provenant de la buse 190 ou de l'enceinte dans laquelle la pièce est fabriquée, ce gaz se trouvant alors piégé dans les bains lors de leur refroidissement rapide.

Pour éliminer les porosités fermées, on peut effectuer un pressage hydrostatique à chaud (en anglais "Hot Isostatic Pressing" ou HIP) après la fabrication de la pièce. On place alors la pièce dans une enceinte de gaz, et on augmente la température et la pression dans l'enceinte : on diminue alors la limite d'élasticité du matériau, ce qui facilite une résorption des porosités fermées sous l'effet de la pression du gaz. Certaines porosités disparaissent complètement mais d'autres ne font que diminuer de diamètre car la pression interne de ces porosités devient égale à la pression appliquée. De plus, lors du refroidissement et de la suppression de la pression appliquée, ces porosités peuvent éclater si par exemple elles sont trop près de la surface libre, endommageant ainsi gravement la pièce.

Par ailleurs, les porosités ouvertes, qui se remplissent de gaz, restent présentes.

Pour éliminer les porosités ouvertes, lors de la fabrication de la pièce, on forme, dans chaque couche, la région destinée à former la surface (ou l'enveloppe) de la pièce de façon plus soignée que la région restante destinée à être la partie centrale de la pièce, de telle sorte que la surface (ou l'enveloppe) de la pièce, une fois formée, ne comporte sensiblement pas de porosités ouvertes.

Cette formation plus soignée s'effectue en balayant avec le faisceau laser la région destinée à être la surface (ou l'enveloppe) de la pièce avec une paramétrie différente de celle employée pour la région restante destinée à être la partie centrale de la pièce. Cette différence de paramétrie entre le coeur et l'enveloppe de la pièce peut être définie dans le fichier CFAO (il s'agit par exemple d'une différence dans la vitesse de balayage du faisceau laser).

Alternativement, ou en complément, on effectue une refusion dans certaines zones de la couche la plus superficielle de la pièce où sont présentes les porosités ouvertes et certaines porosités fermées (par exemple non résorbées par HIP), par exemple en la balayant avec le faisceau laser. Par exemple le faisceau laser porte le matériau de ces zones à une température comprise entre une fois et une fois et demi la température de fusion de ce matériau.

L'élévation de température de la couche supeficielle lors de cette refusion permet un écoulement de la matière qui lisse la surface de la pièce et cicatrise les porosités ouvertes et fermées. On résorbe ainsi les porosités ouvertes et fermées qui étaient encore présentes en surface.

Ainsi, lorsque cette pièce est ensuite traitée par traitement HIP, la couche la plus superficielle de cette pièce agit comme une enveloppe étanche, et la résorption des porosités fermées présentes dans la partie plus centrale de la pièce est facilitée. La pièce après traitement HIP ne comprend donc peu ou pas de porosités fermées, et pas de porosités ouvertes.

## Revendications

1. Procédé de fabrication d'une pièce comprenant les étapes suivantes :
(a) On fournit un matériau sous forme de particules de poudre (60),
(b) On chauffe une première quantité de ladite poudre à une température supérieure à la température de fusion T_{F} de cette poudre à l'aide d'un faisceau de haute énergie (95), et on forme à la surface d'un support (80) un premier bain comprenant cette poudre fondue et une portion de ce support (80),
(c) On chauffe une deuxième quantité de ladite poudre à une température supérieure à sa température de fusion T_{F} à l'aide dudit faisceau de haute énergie (95), et on forme à la surface du support (80) un deuxième bain comprenant cette poudre fondue et une portion de ce support (80) en aval dudit premier bain,
(d) On répète l'étape (c) jusqu'à former une première couche (10) de ladite pièce sur ledit support (80),
(e) On chauffe une [n]^{ième} quantité de ladite poudre à une température supérieure à sa température de fusion T_{F} à l'aide d'un faisceau de haute énergie (95), et on forme un [n]^{ième} bain comprenant en partie cette poudre fondue au dessus d'une portion de ladite première couche (10),
(f) On chauffe une [n+1]^{ième} quantité de ladite poudre à une température supérieure à sa température de fusion T_{F} à l'aide dudit faisceau de haute énergie (95), et on forme un [n+1]^{ième} bain comprenant en partie cette poudre fondue en aval dudit [n]^{ième} bain au dessus d'une portion de ladite première couche (10),
(g) On répète l'étape (f) de façon à former une deuxième couche (20) de ladite pièce au-dessus de ladite première couche (10),
(h) On répète les étapes (e) à (g) pour chaque couche située au dessus d'une couche déjà formée jusqu'à ce que ladite pièce soit sensiblement sous sa forme finale,
ledit procédé étant **caractérisé en ce que**, au moins pendant la formation de chacun des bains (102), on utilise un chauffage d'appoint pour chauffer la matière située dans une zone adjacente audit bain (102), cette zone comprenant au moins une région choisie parmi la région amont (101) située en amont dudit bain (102) et la région aval (103) située en aval dudit bain (102), à une température située entre un quart et quatre cinquième de ladite température de fusion T_{F}.

2. Procédé selon la revendication 1 **caractérisé en ce qu'**on chauffe la matière dans ladite région amont (101) située en amont dudit bain (102) de façon à diminuer la vitesse de refroidissement de cette matière en dessous de sa vitesse de refroidissement naturelle.

3. Procédé selon la revendication 1 ou 2 **caractérisé en ce qu'**on chauffe la matière dans ladite région aval (103) située en aval dudit bain (102) de façon à diminuer la vitesse de chauffage de cette matière en dessous de sa vitesse de chauffage naturelle jusqu'à ladite température de fusion.

4. Procédé selon l'une quelconque des revendications 1 à 3, **caractérisé en ce qu'**on chauffe la matière située dans au moins une partie de ladite zone adjacente au bain (102) à une température située entre un tiers et la moitié de ladite température de fusion T_{F}.

5. Procédé selon l'une quelconque des revendications 1 à 4, **caractérisé en ce qu'**on chauffe ladite matière en utilisant un moyen de chauffage choisi dans le groupe comprenant un four, une plaque chauffante, un inducteur, un faisceau de haute énergie.

6. Procédé selon l'une quelconque des revendications 1 à 5, **caractérisé en ce qu'**on chauffe ladite matière en utilisant une partie défocalisée dudit faisceau de haute énergie (95).

7. Procédé selon l'une quelconque des revendications précédentes, **caractérisé en ce que**, après l'étape (h), on effectue avec un faisceau de haute énergie une refusion de certaines zones de la couche la plus superficielle de ladite pièce de façon à résorber les porosités ouvertes présentes et certaines porosités fermées en surface de ladite pièce.

8. Procédé selon la revendication 7, **caractérisé en ce que**, après ladite refusion, on effectue un pressage hydrostatique à chaud sur ladite pièce de façon à résorber les porosités dans ladite pièce.

9. Procédé selon l'une quelconque des revendications précédentes, **caractérisé en ce que**, après l'étape (h), on forme, dans chaque couche, la région destinée à former la surface de ladite pièce de telle sorte que la surface de la pièce, une fois formée, ne comporte pas de porosités ouvertes ni fermées.

10. Dispositif destiné à fabriquer une pièce par fusion de poudre à l'aide d'un faisceau (95) de haute énergie, ce dispositif comprenant
- Un support de construction (80) destiné à recevoir au moins une couche de poudre (60),
- Un générateur (90) de faisceau de haute énergie apte à porter les particules (60) de cette poudre à une température supérieure à leur température de fusion T_{F}, et à former un bain liquide (102) comprenant au moins les particules de cette poudre fondue,
ce dispositif étant **caractérisé en ce qu'il** comprend en outre un dispositif de chauffage d'appoint qui est apte à chauffer, à une température inférieure à ladite température de fusion T_{F}, la matière située dans une zone adjacente audit bain (102), cette zone comprenant au moins une région choisie parmi la région amont (101) située en amont dudit bain (102) et la région aval (103) située en aval dudit bain (102).
